# EUROPEAN PATENT APPLICATION

(11) **EP 0 855 574 A2**
(43) Date of publication of application: **29.07.1998**
(21) Application number: 98101006.9
(22) Date of filing: 21.01.1998
(51) Int. Cl.: G01B 3/10, G01B 5/00

(54) **Measuring device and -jig for measurements on automobiles**

(30) Priority: 24.01.1997 JP 24558/97; 12.08.1997 JP 228963/97
(71) Applicant: Koto Sangyo Kabushiki Kaisha, Tokyo (JP)
(72) Inventor: Aoki, Nobuyuki, Edogawa-ku, Tokyo (JP)
(74) Representative: Hoffmann, Jörg Peter, Dr. Ing.

(57) **Abstract**

A measuring device for use in a mending work is disclosed which allows an operator to accurately carry out the mending work while eye confirming pulling conditions. A measure base member (27) includes a measure housing (30) with a measure (31) housed therein and is supported above point C by a support pin (33). The measure (31) can be pulled out from the measure housing and is provided at a distal end thereof with a mount aperture (35) through which it may be hooked onto a support base member (28) supported at a different point of a chassis (13). With this arrangement, it becomes possible to measure a point-to-point distance by reading a graduation of the measure pointed by an indexing portion (34) disposed on the measure base member, thus enabling real time recognition of mending or extended conditions.

## Description

### BACKGROUND OF THE INVENTION

### 1. Field of the Invention:

The present invention relates to a measuring device for use in a mending work such as a car mending work in which, for example, a dent or depression made on a car body or chassis by a collision is mended by pulling out the dent to its original position, as well as to a measuring jig for use in measuring a wheel-to-wheel distance between front and rear wheels of the chassis.

### 2. Description of the Related Art:

Conventionally, a dent or depression made, for example, on a front part of a vehicle body or chassis in a collision is mended by a workman who attaches a clamping device to the vehicle front part, connects a chain of a pulling apparatus and then pulls the vehicle body by means of the pulling apparatus. In such a mending work, reference is had to chassis dimensional drawings prepared in advance by car manufacturers for each type of automobiles. Generally, such drawings show dimensions or distances between selected two points of the chassis. During such a pulling work, the workman changes the direction of pulling by the chain and adjust the pulling conditions so that the distances between the respective two point extended to predetermined lengths or distances.

Such a mending work involves delicate varying of the direction and time of pulling, which requires the workman of an experience and a knack. Conventionally, particular, elongate gauge is used for measuring to see whether the respective two points are pulled to predetermined lengths. The gauge takes the form of a rod and have graduations formed along the length thereof. Also, at least two indexing portions are provided slidably along the length of the rod-shaped gauge. Each indexing portion is fixed at a predetermined slide position by tightening a screw. For measuring a length between any selected two points, the indexing portions are slidingly pulled apart to leave therebetween a distance equal to a prescribed length between the two points. With pointers of the indexing portions held at the respective points, the portion of the chassis between the two points is pulled to the prescribed dimension by the pulling apparatus. This work is done to portions between various selected two points of the chassis until those portions come to their prescribed dimensions.

Similar work is performed in measuring, for example, a wheel-to-wheel distance between front and rear wheels of a vehicle encountered an accidental collision. Two indexing portions of an elongate gauge are pulled apart a distance equal to a prescribed center-to-center dimension between the wheels and positioned in confronting relation to the respective wheels. Then, the vehicle is mended by pulling it longitudinally until the wheel-to-wheel distance becomes equal to the prescribed dimension.

Upon taking a measurement using such an elongate gauge, it requires a workman to place pointers of the indexing portions at the respective points and eye confirm values pointed by the pointers. This is a laborious work. In addition, since such a laborious work must be carried out for each portion between various selected points, it is time-consuming and inefficient. Another problem is that when such a pulling operation is performed by an unskilled workman, excessive pulling may happen, thereby making the lengths of some portions larger than the prescribed dimensions.

Recently, there has been proposed a large-sized measuring apparatus which comprises a support table for supporting a chassis thereon and an elongate gauge having indexing portions and mounted to the support table. However, such a measuring apparatus is not only expensive but also occupies a large space. Thus, small repair shops cannot install such a measuring apparatus. Further, the measuring apparatus requires the support table to be moved in an X or Y direction each time the indexing portions are positioned in confronting relation to each selected two point (each time pointers of the indexing portions are arranged to point target positions). This is tedious and time-consuming.

### SUMMARY OF THE INVENTION

It is therefore an object of the present invention to provide a measuring device which allows a workman to carry out a mending work accurately while eye confirming pulling conditions.

Another object of the present invention is to provide a measuring jig which allows a workman to eye confirm a center-to-center distance between front and rear wheels of an automobile during a mending work thereon to thereby enable him to accurately and easily measure the center-to-center distance.

There is provided, according to a first aspect of the present invention, a measuring device for use in a mending work in which portion of a chassis between selected two points is pulled to a prescribed length, the measuring device comprising: a measure housing with a measure housed therein and capable of being pulled out from and wound up on the measure housing and positioned at one point of a chassis; a support portion disposed at a distal end of the measure for supporting the distal end at a different point of the chassis; and an index portion which, during a chassis pulling work, allows detection of a condition of extension of a portion of the chassis between the one point and the different point by measuring a length of pull-out of the measure distal end from the one point as a reference point.

According to a second aspect of the present invention, there is provided a measuring device for use in a mending work in which a portion of a chassis between selected two points is pulled to a prescribed length, the measuring device comprising: a measure base member including a measure housing with a measure housed therein and capable of being pulled out from and wound up on the measure housing and positioned at one point of a chassis, and an index portion allowing detection of a length of pull-out of the measure from the one point as a reference point; and a support base member designed to be positioned at a different point of the chassis and being capable of securing a distal end of the measure pulled out from the measure housing so that a condition of extension of a portion of the chassis between the one point and the different point can be detected during a chassis pulling work by an index portion of the measure base member.

There is provide, according to a third aspect of the present invention, a measuring jig for measuring a center-to-center distance between front and rear wheels of an automobile, in association with a measuring device for use in a mending work, the measuring jig comprising: plate-like measuring jig bodies designed to be positioned in opposed relation to the front and rear wheels; positioning members supported on the measuring jig bodies and capable of moving toward and away from the opposed front and rear wheels and abutting against the latter; bolt connectors supported slidably along oblong apertures formed in the measuring jig bodies radially about a support portion for supporting the positioning members, the bolt connectors being capable of coupling engagement with hub bolts formed along peripheral edges of hub wheels of the front and rear wheels and angularly spaced from each other by a predetermined angle to thereby position the measuring jig bodies in confronting relation to the wheels; and one of the measuring jig bodies positioned to confront the wheels being provided at a positioning member support portion thereof with a measure support portion for supporting a measure capable of pull-out and wind-up actions, the other one of the measuring jig bodies being provided at a positioning member support portion thereof with a retainer portion for retaining a distal end of the measure pulled out from the measure support portion.

According to a fourth aspect of the present invention, there is provided a measuring jig for measuring a center-to-center distance between front and rear wheels of an automobile, in association with a measuring device for use in a mending work, the measuring jig comprising: plate-like measuring jig bodies designed to be positioned in opposed relation to the front and rear wheels; positioning members supported on the measuring jig bodies and capable of moving toward and away from the opposed front and rear wheels and abutting against the latter; bolt connectors supported slidably along oblong apertures formed in the measuring jig bodies radially about a support portion for supporting the positioning members, the oblong apertures being angularly spaced from each other by a predetermined angle corresponding to a bolt-to-bolt angular spacing between at least two hub bolts disposed peripherally about the center of wheel hubs of the front and rear wheels at a predetermined angle of spacing, the bolt connectors being capable of coupling engagement with the hub bolts to thereby position the measuring jig bodies in confronting relation to the wheels; and one of the measuring jig bodies positioned to confront said wheels being provided at the positioning member support portion with a measure support portion for supporting a measure capable of pull-out and wind-up actions, the other one of the measuring jig bodies being provided at the positioning member support portion with a retainer portion for retaining a distal end of the measure pulled out from the measure support portion.

### BRIEF DESCRIPTION OF THE DRAWINGS

The above and other objects and advantages of the present invention will become apparent from the following detailed description of the preferred embodiments when read in conjunction with the accompanying drawings, in which:
Fig. 1 is a perspective view illustrating a measure base member of a measuring device according to a preferred embodiment of the present invention;
Fig. 2 is a perspective view showing how the measuring device is positioned at points on a frontal part of a chassis to be subjected to a pulling work;
Fig. 3 is a perspective view illustrating a support base member of the measuring device;
Fig. 4 is a perspective view illustrating the overall configuration of the measure base member;
Fig. 5 is a schematic perspective view illustrating how the frontal part of the chassis is pulled by means of a vehicle pulling or mending apparatus;
Fig. 6 is a side elevational view illustrating, on an enlarged scale, the vehicle mending apparatus;
Fig. 7 is a perspective view illustrating an altered form of the measuring device according to the preferred embodiment of the present invention;
Fig. 8 is a perspective view illustrating a measuring device according to a separate embodiment of the present invention;
Fig. 9 illustrates an example of chassis dimensional drawings conventionally used in a car mending work;
Fig. 10 is a perspective view showing how a wheel-to-wheel distance of an automobile is measured using a wheel-to-wheel distance measuring jig body according to a preferred embodiment of the present invention;
Fig. 11 is a perspective view showing how a first jig member is positioned in opposed relation to a rear wheel;
Fig. 12 is a perspective view illustrating the first jig member as mounted to the rear wheel;
Fig. 13 is a perspective view showing how a second jig member is positioned in opposed relation to a front wheel;
Fig. 14 is a perspective view illustrating the second jig member as mounted to the front wheel;
Fig. 15 is a front elevational view of the first jig member;
Fig. 16 is a cross-sectional view taken along line VI - VI of Fig. 15;
Fig. 17 is a front elevational view of the second jig member;
Fig. 18 is a cross-sectional view taken along line VIII - VIII of Fig. 17;
Fig. 19 illustrates different patterns of angular spacing of hub bolts in different automobiles;
Fig. 20 is a front elevational view illustrating an altered form of the measuring jig body; and
Fig. 21 is a perspective view similar to Fig. 13 but illustrating the second jig member employing the measuring jig body shown in Fig. 20, as positioned in opposed relation to the front wheel.

### DETAILED DESCRIPTION OF THE PREFERRED EMBODIMENT

The following description is merely exemplary in nature and is in no way intended to limit the invention or its application or uses.

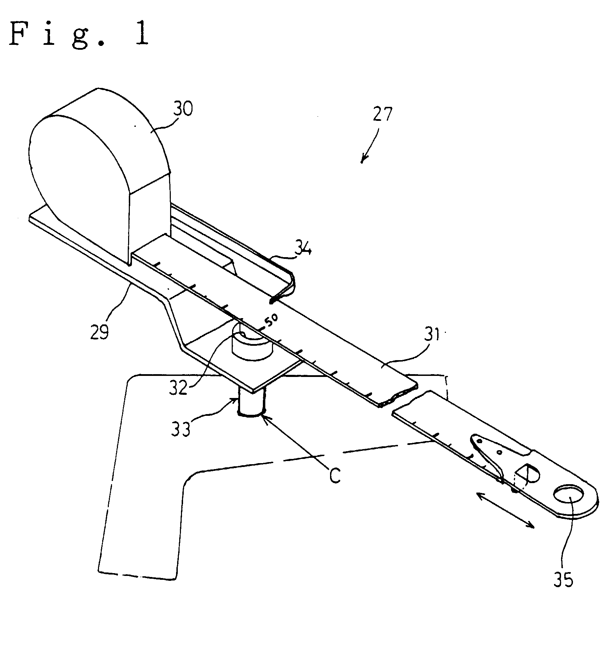

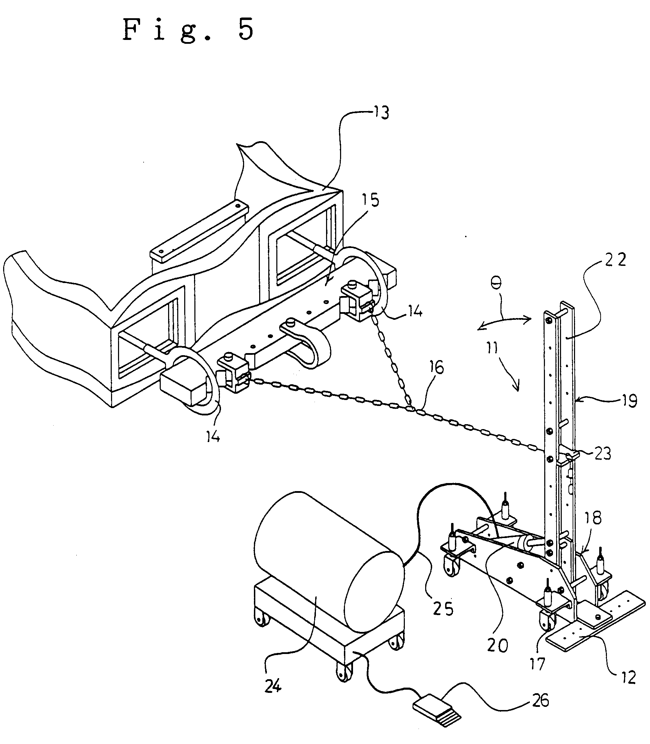

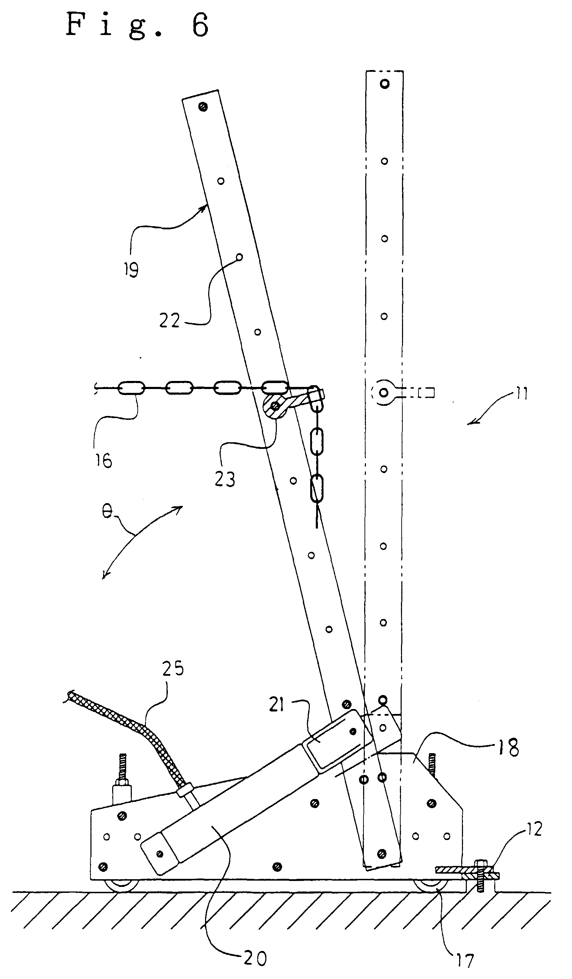

Fig. 1 - Fig. 4 relate to an embodiment of the present invention and, more specifically, to a measuring device for use in a mending work or operation, as recited in claims 2, 4 and 5. Since the present measuring device is particularly suited to a mending work using a vehicle mending apparatus 11 as proposed (in Japanese Design Application No. HEI 8-10075) by the present inventors and shown in Figs. 5 and 6 hereof, reference is initially had to Figs. 5 and 6.

As shown in Fig. 5, the vehicle mending apparatus 11 is attached to an anchor member 12 fixedly secured, for example, to a floor of a car repair workshop in an opposed relation to a chassis 13. Attached to a frontal part of the chassis 13 is a pair of annular members 14 carrying an elongate jig 15 passing therethrough. A traction or drawing chain 16 is hooked to the jig 15. The vehicle mending apparatus 11 includes a base member 18 having a plurality of casters 17 and supporting thereon a tower portion 19 composed of a pair of support plates. The tower portion 19 is supported swingably in the direction of arrow θ relative to the base member 18. Between a pair of support plates forming the base member 18, there is disposed a push ram (oil cylinder) 20 having a cylinder rod 21, as shown in Fig. 6, with a top end pin connected to mounting apertures 22 of plate members forming the tower portion 19. A chain anchoring member 23 is disposed at an upper part of the tower portion 19 in a sandwiched manner between the plate members thereof via a bolt and a nut. The chain 16 is anchored at one end to the chain anchoring member 23 and connected at opposite ends to the jig 15. A pneumatically-actuated hydraulic pump 24 has an oil supply hose 25 with one end connected to the push ram 20. By stepping on a foot pedal 26, the hydraulic pump 24 is actuated to supply an oil to the push ram 20 (see Fig. 5).

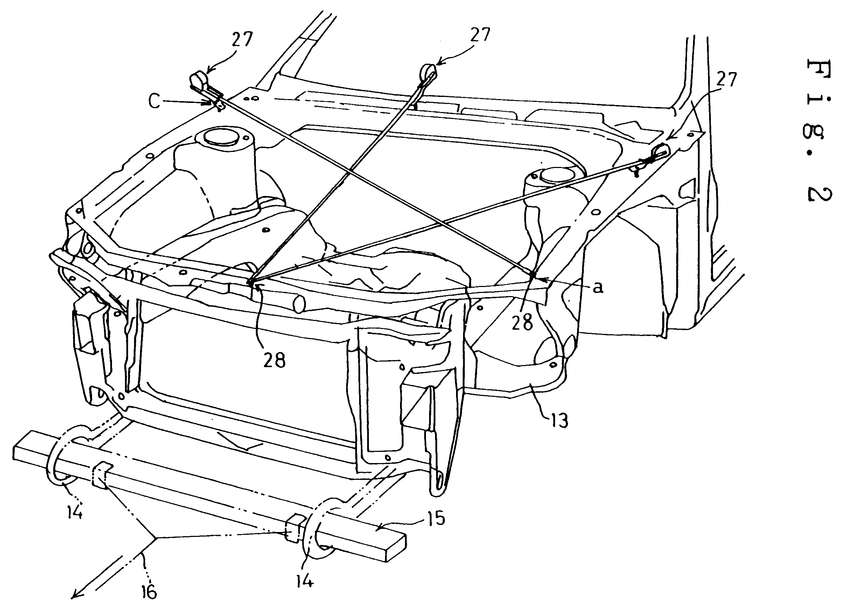

For performing, for example, a drawing or mending operation with respect to a frontal portion of the chassis 13 by use of the vehicle mending apparatus 11, an oil is supplied to the push ram 20 to cause the tower portion 19 to be rotated to an upright direction (e.g., from a position indicated by a solid line to a position indicated by a two-dot chain line in Fig. 6). This causes the chain 16 to draw the chassis 13 in the direction of the arrow of Fig. 5. Chassis mending involves the use of chassis dimensional drawings as shown in Fig. 9. Based on such dimensional drawings, draw mending is performed on the chassis 13 such that each dimension between respective two points becomes a predetermined dimension. The measuring device according to the preferred embodiment is used in the mending work and positioned to extend between the respective two points as shown in Fig. 2.

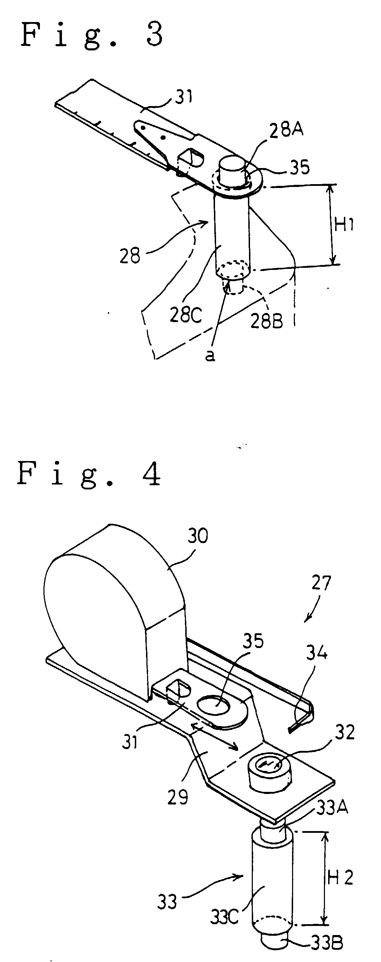

The measuring device comprises a measure base member 27 supported as at point C of Fig. 2 and a support base member 28 provided at a top end of a measure or ruler 31 thereof and supported as at point a. The measure base member 27 has the general arrangement as shown in Fig. 4 and comprises a plate-like member 29 with upper- and lower-level portions, and a measure receptacle or housing 30 disposed on the upper level of the plate-like member 29. The measure 31 is housed in the measure housing 30 in such a manner that it can be pulled out and wound up as shown by an arrow in Fig. 1 or Fig. 4. The measure 31 comprises a thin sheet metal and has length graduations (measures of length) formed on a surface thereof. As best shown in Fig. 4, a support aperture 32 is formed in the lower-level portion. An upper end 33A of a support pin 33 is inserted into the support aperture 32 and held therein (see Fig. 4). The upper end 33A and a lower end 33B of the support pin 33 have a diameter smaller than the diameter of a central portion 33C. The lower end 33B of the support pin 33 is inserted into an aperture formed at point C, as shown in Fig. 1, and held therein. The measure housing 30 supports on one side thereof a base of an index portion 34. The index portion 34 extends such that its top end is positioned upwardly centrally of the support aperture 32 and points the graduations on the measure 31 pulled out from the measure housing 30. The top end of the measure 31 is provided with a mount aperture 35. The starting point 0 of the graduations on the measure 31 is located at the center of the mount aperture 35. Thus, the index 34 points and measures the graduations falling between the support aperture 32 of the measure body 27 and the center of the mount aperture 35 of the measure 31 to be pulled out (see Fig. 1).

As best shown in Fig. 3, the support base member 28 of the measure top end supported at point a is constructed similarly to the support pin 33 of the above-described measure base member 27 and has an upper end 28A, a lower end 28B and a central portion 28C, the upper and lower ends having a diameter smaller than that of the central portion. The lower end 28B of the support base member 28 is inserted into an aperture formed at point a and held therein. The top end of the measure 31 pulled out from the measure housing 30 of the measure base member 27 is secured to the support base member 28 thus held at point a by engaging the mount aperture 35 of the measure 31 with the upper end 28A of the support base member 28. This is repeated so that the measure 31 extends between points C-a and other like points, as shown in Fig. 2. When a pulling operation is performed by means of the chassis mending apparatus 11 with the measure 31 thus arranged, an extended or mending condition between each respective two points can be determined at real time by reading the graduations on the measure 31 pointed by the index portion 34. In other words, an operator can perform the mending work by reading the graduations on the measure 31 extending between each respective two points and stepping on the foot pedal 26 to adjust the amount of an oil to be supplied to the push ram 20. As a result, it becomes possible to avoid pulling the two points apart excessively and to extend the distance between the two points to a predetermined length precisely. Further, in the described measuring device, the central portion 28C of the support base member 28 shown in Fig. 3 has a length H1 selected to be identical to a length H2 of a central portion 33C of the support pin 33 shown in Fig. 5 so that a precise length between the two points can be detected. When required, the lengths of the central portions 28C, 33C may be increased so as to avoid interferences between the measure 31 and car body parts such as an engine head and a radiator.

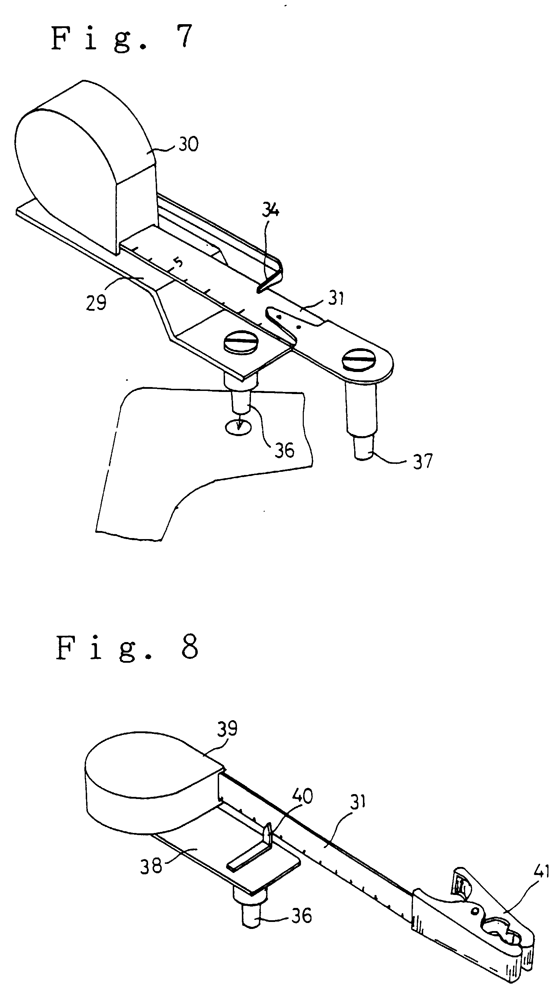

Fig. 7 illustrates a measuring device for use in a mending work, as defined in appended claims 1 and 3, according to a separate embodiment of the present invention. This measuring device is constructed similarly to the measure base 27 of the measuring device according to the above-described embodiment and includes a measure housing 30 disposed on an upper-level portion of a plate-like member 29. On a lower surface of a lower-level portion of the plate-like member 29, there is provided a support pin 36 to be inserted into an aperture formed at each point for supporting the measuring device at that point. Extending downwardly from a lower surface of a top end of a measure 31 is a support pin 37 for supporting the top end at a different point on the chassis 13. That is, the support pin 37 is designed to be inserted into an aperture formed at the different point on the chassis 13. With the measuring device just described, the desired detection can also be achieved by reading a point of the graduations pointed by the top end of the index portion 34, which point represents a length of pull-out of the measure 31 to a starting or reference point at the top end of the latter. Since other features of the measuring device are substantially the same as those of the firstly-described measuring device, their description will be omitted.

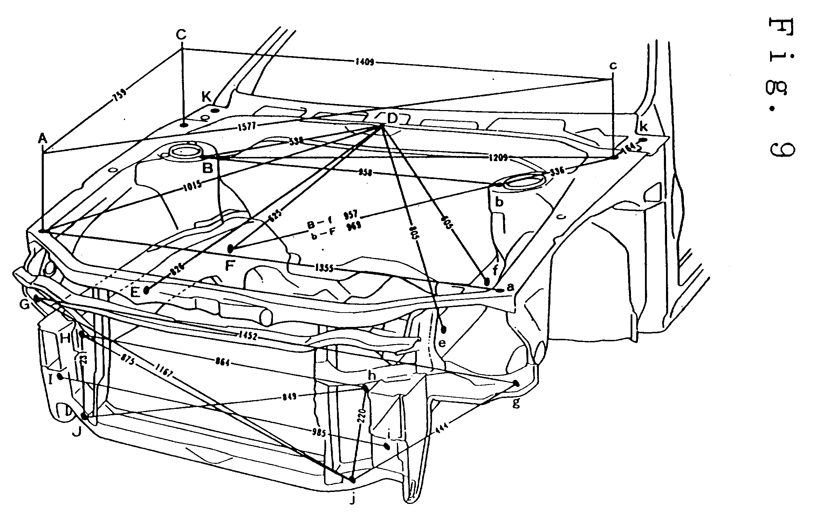

Fig. 8 illustrates an alteration of the measuring device shown in Fig. 7. In this measuring device, a measure housing 39 is disposed on a plate-like member 38. On an under side of the plate-like member 38, there is provided a support pin 36 which may be inserted into an aperture formed at a point of detection. An index portion 40 is disposed on an upper surface of the plate-like member 38 at a position corresponding to the center of the support pin 36. A measure or ruler 31 which can be pulled out from the measure housing 39 includes a top end having a clip member (support portion) 41. The clip member 41 is designed to directly hold a separate chassis point or a jig fastened to the separate point, whereby the length or distance between the two points can be detected by reading an indication of the measure graduations by the index portion 40.

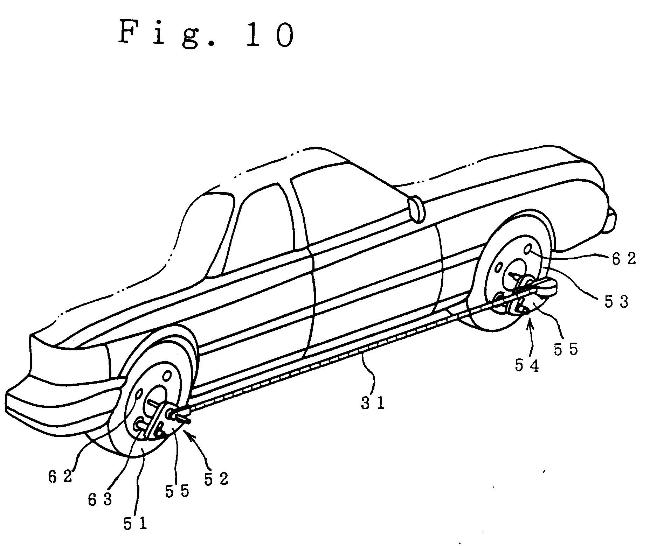

Fig. 10 to Fig. 18 illustrate a manner for detecting a wheel-to-wheel distance of an automobile by using the measuring device according to the embodiment of Figs. 1 to 4 and an associated jig for measuring uses. The jig comprises a pair of jig members each connectable to respective one of front and rear wheels of an automobile. As shown in Fig. 10, it comprises a first jig member 52 connected to an outer side of the rear wheel 51 and a second jig member 54 connected to an outer side of the front wheel 53.

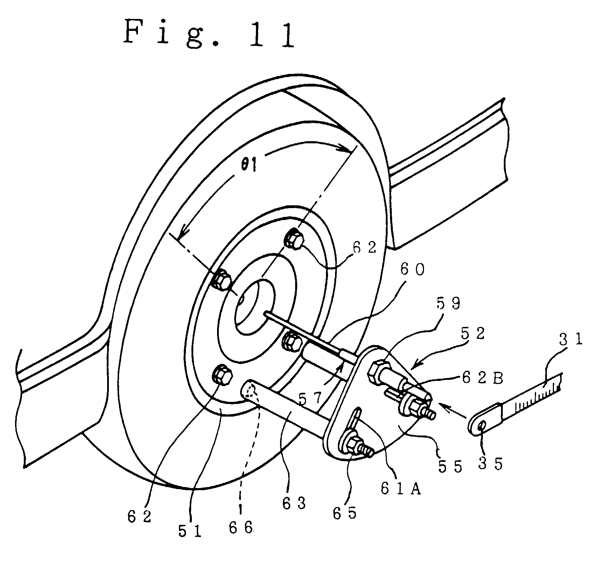

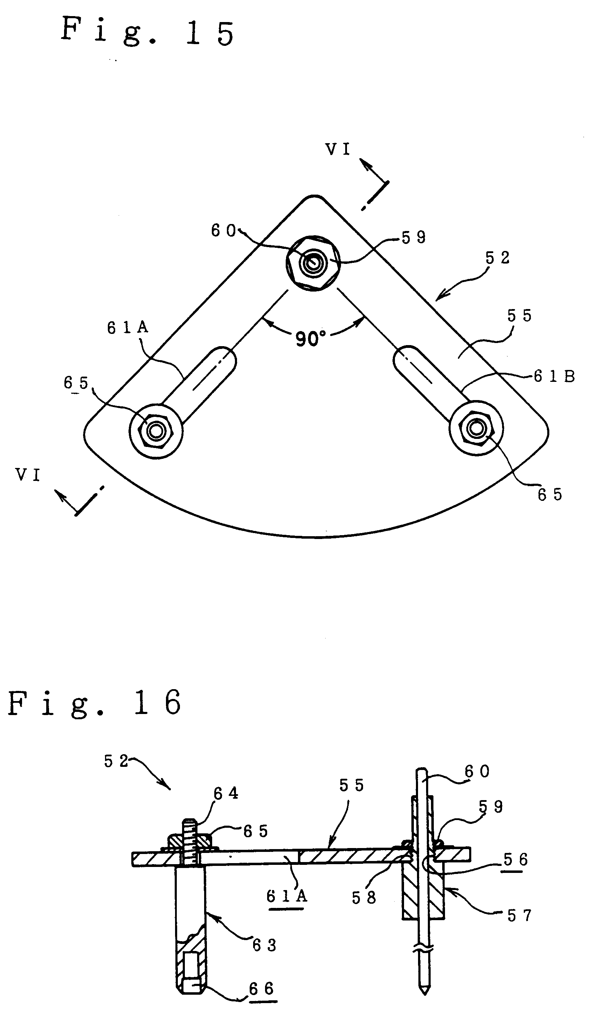

As shown in Fig. 11, the first jig member 52 includes a jig body 55 disposed in opposed relation to the outer side of the rear wheel 51. The jig body 55 comprises a metal plate in the shape of a sector. At a central part of the sector of the jig body 55, there is formed an aperture 56, as shown in Fig. 16, into which a proximal end of a rod-like engaging member 57 for positioning is inserted. The engaging member 57 has a male thread portion 58 at the proximal end thereof. The male thread portion 58 is threadedly engaged in the aperture 56 and with a nut 59 at its portion projecting upwardly from the aperture 56 (see Figs. 15 and 16). A slide shaft 60 for positioning is disposed axially slidably within the engaging member 57 coupled to and supported by the jig body 55. The slide shaft 60 is capable of telescopic movement toward and away from the center of the opposed rear wheel 51 and may be slid until its top end abuts against the wheel center.

The sector-shaped jig body 55 has two oblong apertures 61A, 61B angularly spaced by 90 degrees from each other about the aperture 56 and extending in a radial direction. The spaced angle of 90 degrees of the two oblong apertures 61A, 61B corresponds to an angle θ1 between two adjacent hub bolts 62 equidistantly disposed along a periphery of a hub wheel of the opposed rear wheel 51 (Fig. 11). In the example automobile illustrated in Fig. 11, there are four hub bolts 62 disposed peripherally of the hub wheel. Passing through and anchored in the oblong apertures 61A, 61B are proximal ends of bolt connectors 63 each in the form of a rod extending toward the wheel hub. At the proximal ends, the bolt connectors 63 have male thread portions 64 which are threadedly engaged in the oblong apertures 61A, 61B and fixedly secured therein by nuts 65 (see Figs. 15 and 16). By sliding the proximal end of each bolt connector 63 along the respective oblong aperture 61A, 61B, a distal end of the bolt connector 63 may be positioned in opposed relation to one of the hub bolts 62 of the wheel hub. While maintaining this positioning, the nut 65 is tight-end to fix the proximal end at a predetermined slide position along the oblong aperture 61A, 61B.

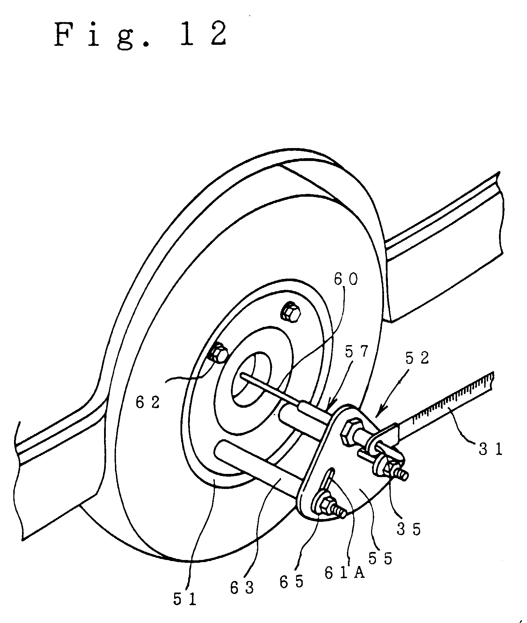

At the distal end, each bolt connector 63 has an engaging hole 66 (hexagonal or round hole in the form of a socket) capable of receiving a head of the hub bolt 62. By causing the engaging hole 66 to receive the head of the opposed hub bolt 62, the bolt connector 63 is fitted over the bolt 62 (see Fig. 12. The first jig member 52 in its entirety is thus attached to the wheel hub by means of the two hub bolts 62. In this state, the distal or top end of the slide shaft 60 passing through the engaging member 57 is advanced toward the center of the wheel hub until it abuts against the hub wheel center. The shaft 60 is thus positioned at the center of the rear wheel 51. When such an appropriate positioning is not achieved, either one or both of the nuts 65 threadedly engaged with the proximal ends of the respective bolt connectors 63 are untightened, whereafter the bolt connectors 63 are moved slightly along the oblong apertures 61A, 61B so that the distal end of the shaft 60 is appropriately positioned at the center of the wheel hub of the rear wheel 51.

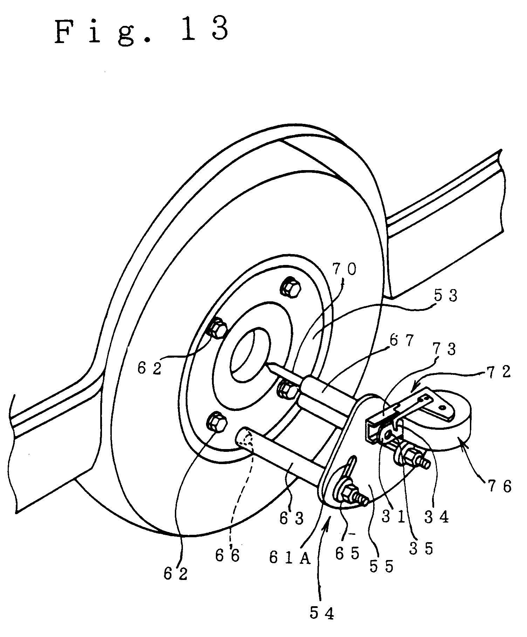

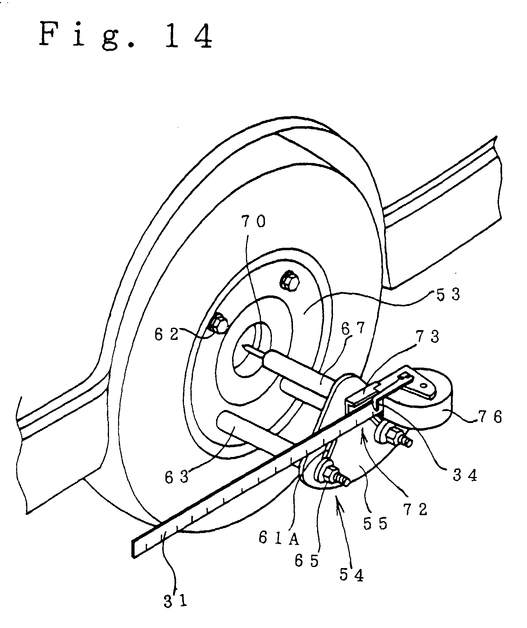

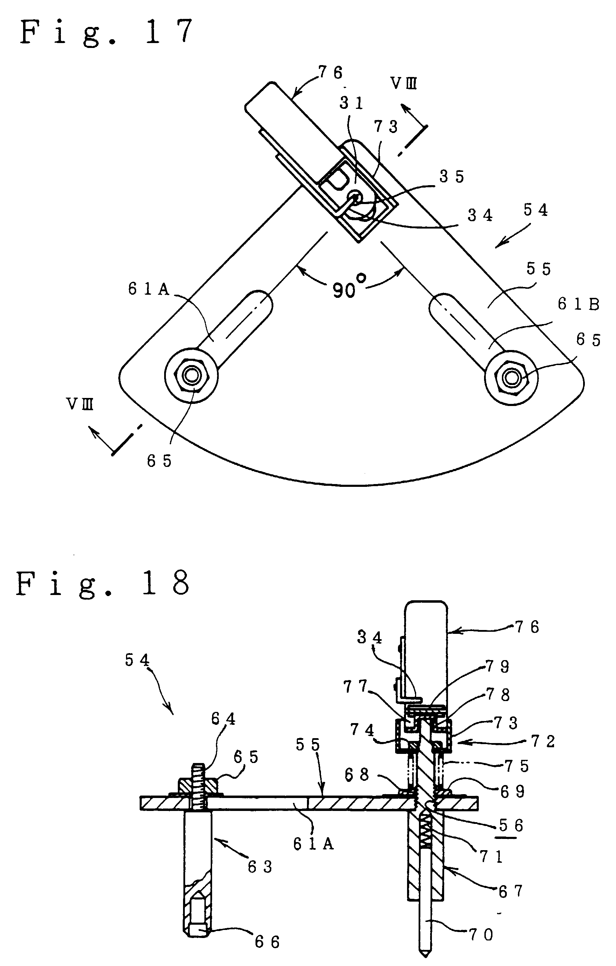

As shown in Fig. 13, the second jig member 54 includes a measuring jig body 55 disposed in opposed relation to an outer side of the front wheel 53. The measuring jig body 55 is constructed identically to the measuring jig body 55 of the first jig member 52. Received in an aperture 56 of the jig body 55 is a longitudinally central part of an engaging member 67 in the form of a rod or cylinder for serving as a positioning member, as shown in Fig. 18. More specifically, the engaging member 67 has a stepped portion with a proximal end (upper part in Fig. 18) of reduced diameter, at a longitudinally central part thereof, which stepped portion is received and held in the aperture 56. Upwardly of the stepped portion, there is proved a male thread portion 68. A nut 69 is placed in threaded engagement with a portion of the male thread portion 68 projecting upwardly past the aperture 56. A slide shaft 70 for positioning is disposed axially slidably within a distal or top end (lower side in Fig. 18) of the engaging member 67. The slide shaft 70 takes the form of a pin and is received in an accommodation hole formed in the distal end of the engaging member 67 such that it cooperates with a spring 71 also received in the accommodation hole. The distal end of the shaft 70 can be moved from a position in which the second jig member 54 is opposed to the front wheel 53 as shown in Fig. 13, to a position in which the second jig member 54 is brought closely to the front wheel 53 until the distal end abuts against the wheel center as shown in Fig. 14, whereupon the shaft 70 slides deep into the accommodation hole, thereby compressing the spring 71. Conversely, when the second jig member 54 is pulled away from the front wheel 53, the distal end of the shaft 70 is released from abutting engagement with the wheel center, thereby allowing the compressed spring 71 to extend to urge the shaft 70 in a forward direction. The shaft 70 can thus be telescopically moved toward and away from the center of the front wheel so as to bring its distal end into and out of abutting engagement with the wheel center.

The proximal end (upper part in Fig. 18) of the engaging member 67 has a measure support portion 72, which is comprised of a frame member 73 press fit to the stepped portion at the proximal end of the engaging member 67 and secured thereto via a nut 74. Designated by reference numeral 75 is a spring sandwiched between the frame member 73 and nut 69. Located above the measure support portion 72 is a measure base member 76 of construction substantially similar to the measure base member 27 as shown in Fig. 1. The measure base member 76 has a hole 76, formed proximately to a mounting metal piece 77 fixed thereto, for coupling engagement with the proximal end of the engaging member 67. As shown in Fig. 17, a measure 31 is housed in the measure base member 76 thus attached to the proximal end of the engaging member 67 such that it can be pulled out from and wound up on the body 76. The measure 31 is comprised of a thin metal sheet with length graduations formed on a surface thereof. At the top of the measure or metal sheet, there is formed a mounting aperture 35 which functions as the datum point. The measure 31 has a wind-up spring housed in the measure base member 76, which automatically winds up the out-pulled measure 31 when a wind-up button not shown is pressed. The measure base member 76 is also provided with an indexing portion 34 which points a length of pull-out of the measure 31 from the datum point (where the mounting aperture 35 is located). The indexing portion 34 is located upwardly of a hole 78 (Fig. 18) for receiving the proximal end of the engaging member 67.

In addition, bolt connectors 63 are passed through respective oblong apertures 61A, 61B of the jig body 55 of the second jig member 54 slidably therealong and can be fixedly secured at predetermined positions, as in the first jig member 52. Stated otherwise, as in the first jig member 52, the bolt connectors 63 of the second jig member 54 are slid to be positioned to confront hub bolts of a wheel hub of the front wheel 53 and then fixed at such slide positions along the oblong apertures 61A, 61B by tightening the nuts 65.

The second jig member 54 thus arranged is also positioned with respect to the opposed front wheel 53, as shown in Fig. 14, so that the heads of the hub bolts 62 are engaged in respective engaging holes 66 (Fig. 18) of the bolt connectors 63. Then, the top end of the slide shaft 70 provided at the top end of the engaging member 67 is brought into abutting engagement with the wheel center of the front wheel 53 so that the shaft 70 is positioned centrally of the front wheel 53. When such desired positioning is established, either one or both of the nuts 65 being in threadedly secured to the proximal end of each bolt connector 63 may be slightly untightened, whereafter the bolt connectors 63 may be slightly slid along the oblong apertures 61A, 61B so that the distal end of the shaft 70 is positioned at the wheel center of the front wheel 53. If necessary, this operation may be repeated.

With the engaging member 57 of the first jig member 52 positioned at the wheel center of the rear wheel 51 and with the engaging member 67 of the second jig member 54 positioned at the wheel center of the front wheel 53, the measure 31 is pulled out from the measure body 76 housed in the measure support portion 72 of the second jig member 54 toward the first jig member 52 and hooked onto the proximal end of the shaft 60 by engaging the mounting aperture 35 at the top end of the measure 31 with the latter, as shown in Fig. 12. As a result, the measure 31 is disposed to extend between the front wheel 53 and rear wheel 51, as shown in Fig. 10, whereby it becomes possible to find out a wheel-to-wheel distance or length by just reading a graduation on the measure 31 pointed by the indexing portion 34. Now that the measure support portion 72 of the second jig member 54 positionally restricts the measure base member 76 through the frame member 773 upwardly urged by the spring 75, the measure 31 can be pulled out linearly toward the rear wheel 51. Also, with the upper end of the engaging member 67 being rotatable within the hole 78, it is possible to adjust the rearward pull-out condition or orientation of the measure 31.

Use of the measuring jig in accordance with the above-described embodiment enables real time detection of a wheel-to-wheel distance during a drawing or pulling operation on a vehicle chassis. In other words, it becomes possible for an operator to find out accurately and easily the center-to-center distance between the front and rear wheels of a vehicle through his eyes while performing a pulling operation on the vehicle using the chassis mending apparatus 11 as shown in Fig. 3.

In the embodiment described above, although the two bolt connectors 63 are coupled with the respective hub bolts 62 of the rear and front wheels 51, 53, only one bolt connector 63 of each jig member 52, 54 may be coupled with the opposed hub bolt 62. Further, in each measuring jig body 55, instead of the two oblong apertures, only one oblong aperture may be provided such that it extends radially from the sector corner aperture. Similarly, only one jig member may be provided in place of the two jig members 52, 54.

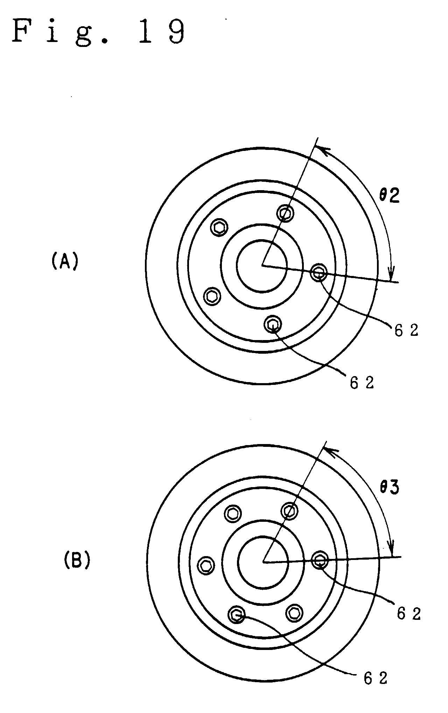

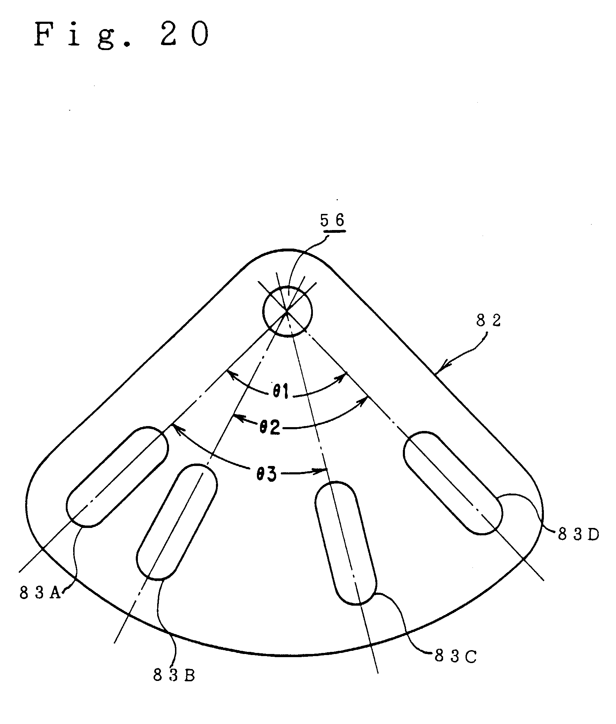

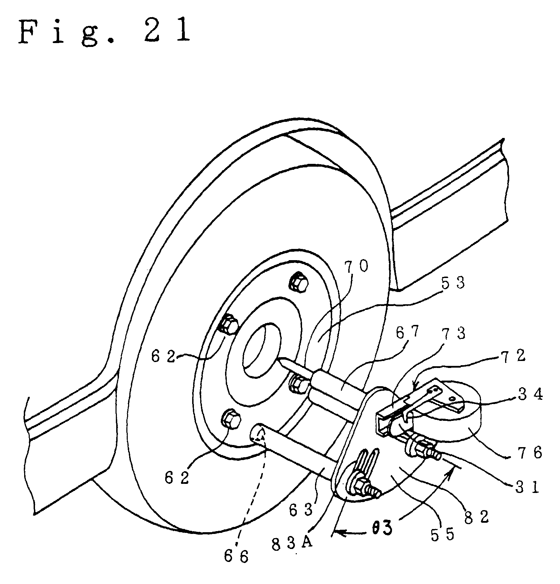

The embodiment has been discussed in relation to a case where four hub bolts 62 are provided peripherally of each hub of the rear and front wheels 51, 53. That is, in the above embodiment, the hub bolts 62 are angularly displaced from each other by the angle of θ1 (Fig. 11) which is set to be 90 degrees, and, correspondingly, the angle of displacement of the oblong apertures 61A, 61B about the sector corner aperture 56 is set to be 90 degrees. However, different types of cars are also available which comprise wheel hubs each having five hub bolts 62 or six hub bolts 62 arranged peripherally of the wheel hubs, as shown in Figs. 19B and 19B, respectively. In the example illustrated in (A) of Fig. 19, angle of displacement θ2 between two adjacent hub bolts 62 is set at 72 degrees while angle of displacement θ3 between two adjacent hub bolts 62 in the example shown in (B) of Fig. 19 is set to be 60 degrees. Thus, jig members 52, 54 employing the measuring jig body 55 with the oblong apertures 61A, 61B angularly displaced from each other by 90 degrees in accordance with the above described embodiment may not be applied here. To this end, the present inventors have proposed a separate embodiment, that is, a measuring jig body 82 as shown in Fig. 20. The measuring jig body 82 is in the form of a sector with four oblong apertures 83A, 83B, 83C and 83D extending radially about an aperture 56 at the sector corner. Of these apertures, the oblong apertures 83B, 83D are angularly spaced from each other by 72 degrees (θ2) while the oblong apertures 83A, 83C are angularly spaced from each other by 60 degrees (θ3). When, for example, two adjacent hub bolts on the wheel hub are angularly spaced from each other by an angle of θ3 as shown in Fig. 21, the bolt connectors 63 may be attached to the respective oblong apertures 83A, 83C as shown in the figure, thereby enabling the required wheel-to-wheel distance detection. It should also be noted that when the angular displacement between two hub bolts is θ1 as in the above embodiment or θ2 as shown in (A) of Fig. 19, the bolt connectors 63 may be selectively coupled with the corresponding oblong apertures to thereby enable the subsequent mending work. Additional features of the just described measuring jig body are substantially the same as those of the one according to the firstly described embodiment and their discussion will therefore be omitted.

Obviously, various minor changes and modifications of the present invention are possible in the light of the above teaching. It is therefore to be understood that within the scope of the appended claims, the present invention may be practiced otherwise than as specifically described.

## Claims

1. A measuring device for use in a mending work in which a portion of a chassis between selected two points is pulled to a prescribed length, said measuring device comprising:
a measure housing with a measure housed therein and capable of being pulled out from and wound up on said measure housing and positioned at one point of a chassis;
a support portion disposed at a distal end of said measure for supporting said distal end at a different point of said chassis; and
an index portion which, during a chassis pulling work, allows detection of a condition of extension of a portion of said chassis between said one point and said different point by measuring a length of pull-out of said measure distal end from said one point as a reference point.

2. A measuring device for use in a mending work in which a portion of a chassis between selected two points is pulled to a prescribed length, said measuring device comprising:
a measure base member comprising:
a measure housing with a measure housed therein and capable of being pulled out from and wound up on said measure housing and positioned at one point of a chassis; and
an index portion allowing detection of a length of pull-out of said measure from said one point as a reference point; and
a support base member designed to be positioned at a different point of said chassis and being capable of securing a distal end of said measure pulled out from said measure housing so that a condition of extension of a portion of said chassis between said one point and said different point can be detected during a chassis pulling work by an index portion of said measure base member.

3. A measuring device for use in a mending work, according to Claim 1, wherein said measure housing and said support portion are supported through respective apertures formed at said points of said chassis.

4. A measuring device for use in a mending work, according to Claim 2, wherein said measure base member and said support base member are supported through respective apertures formed at said points of said chassis.

5. A measuring device for use in a mending work, according to Claim 2, wherein said support base member has a lower end portion in the form of a pin capable of being received and held in said aperture formed at said different point of said chassis, and an upper end portion capable of being engaged in an aperture formed in said distal end of said measure pulled out from said measure housing.

6. A measuring jig for measuring a center-to-center distance between front and rear wheels of an automobile, in association with a measuring device for use in a mending work, said measuring jig comprising:
plate-like measuring jig bodies designed to be positioned in opposed relation to said front and rear wheels;
positioning members supported on said measuring jig bodies and capable of moving toward and away from said opposed front and rear wheels and abutting against the latter;
bolt connectors supported slidably along oblong apertures formed in said measuring jig bodies radially about a support portion for supporting said positioning members, said bolt connectors being capable of coupling engagement with hub bolts formed along peripheral edges of hub wheels of said front and rear wheels and angularly spaced from each other by a predetermined angle to thereby position said measuring jig bodies in confronting relation to said wheels; and
one of said measuring jig bodies positioned to confront said wheels being provided at a positioning member support portion thereof with a measure support portion for supporting a measure capable of pull-out and wind-up actions, the other one of said measuring jig bodies being provided at a positioning member support portion thereof with a retainer portion for retaining a distal end of said measure pulled out from said measure support portion.

7. A measuring jig for measuring a center-to-center distance between front and rear wheels of an automobile, in association with a measuring device for use in a mending work, said measuring jig comprising:
plate-like measuring jig bodies designed to be positioned in opposed relation to said front and rear wheels;
positioning members supported on said measuring jig bodies and capable of moving toward and away from said opposed front and rear wheels and abutting against the latter;
bolt connectors supported slidably along oblong apertures formed in said measuring jig bodies radially about a support portion for supporting said positioning members, said oblong apertures being angularly spaced from each other by a predetermined angle corresponding to a bolt-to-bolt angular spacing between at least two hub bolts disposed peripherally about the center of wheel hubs of said front and rear wheels at a predetermined angle of spacing, said bolt connectors being capable of coupling engagement with said hub bolts to thereby position said measuring jig bodies in confronting relation to said wheels; and
one of said measuring jig bodies positioned to confront said wheels being provided at said positioning member support portion with a measure support portion for supporting a measure capable of pull-out and wind-up actions, the other one of said measuring jig bodies being provided at said positioning member support portion with a retainer portion for retaining a distal end of said measure pulled out from said measure support portion.

8. A measuring jig for measuring a center-to-center distance between front and rear wheels of an automobile, according to Claim 6 or 7, wherein said measure support portion is provided, at a portion corresponding to a central position of said opposed wheels, with an index portion for pointing a length of pull-out of said measure from said measure support portion.

9. A measuring jig for measuring a center-to-center distance between front and rear wheels of an automobile, according to Claim 7, wherein each of said measuring jig bodies is provided with plural pairs of oblong apertures spaced from each other by an angle corresponding to separate bolt-to-bolt angular spacing between hub bolts disposed peripherally about the center of wheel hubs of an automobile of different model, and said bolt connectors are engageable selectively in those of said oblong apertures which are opposed to respective ones of said hub bolts of said wheel hubs.

10. A measuring jig for measuring a center-to-center distance between front and rear wheels of an automobile, according to Claim 6 or 7, wherein said measuring jig bodies are in the form of a metallic sheet, said positioning members are in the form of engaging members engageable in apertures formed in said metallic sheets at positions opposed to the center of said wheels, and said engaging members have a shaft provided internally thereof, said shaft being provided with an abutting portion at a distal end thereof and capable of telescopic movement toward and away from said wheel center.

11. A measuring jig for measuring a center-to-center distance between front and rear wheels of an automobile, according to Claim 6 or 7, wherein said bolt connectors are in the form of a rod with a distal end extending toward said opposed wheels, each of said rods has a proximal end with a male thread portion engaged in respective one of said oblong apertures, said male thread portion projecting past said respective oblong aperture is threadedly engaged with a nut and slid along said oblong aperture to a position where said distal end of said rod confronts respective one of said hub bolts of said wheel hubs to thereby fixedly position said rod at that position by tightening said nut, and said distal end of said rod is provided with an engaging aperture capable of coupling engagement with a head of said respective hub bolt.
